# EUROPEAN PATENT SPECIFICATION

(11) **EP 3 435 761 B1**
(45) Date of publication and mention of the grant of the patent: **07.05.2025**
(21) Application number: 17714884.8
(22) Date of filing: 08.03.2017
(51) Int. Cl.: A01M 7/00

(54) **AN AGRICULTURAL SPRAYER AND ASSOCIATED METHOD**
LANDWIRTSCHAFTLICHER SPRÜHER UND ENTSPRECHENDES VERFAHREN
PULVÉRISATEUR AGRICOLE ET PROCÉDÉ ASSOCIÉ

(30) Priority: 29.03.2016 US 201662314611 P
(43) Date of publication of application: 06.02.2019
(73) Proprietor: AGCO Corporation, Duluth, GA 30096 (US); AGCO International GmbH, 8212 Neuhausen am Rheinfall (CH)
(72) Inventor: ZIMMERMAN, Jeffery Michael, Hesston, KS 67062-0969 (US); HIDDEMA, Joris, Jan, 5971 NG Grubbenvorst (NL)
(74) Representative: AGCO Intellectual Property Department
(86) International application number: PCT/IB2017/000228
(87) International publication number: WO 2017/168227

(56) References cited:
- WO-A1-2015/020307
- US-A1- 2003 150 933
- US-A1- 2014 245 663

## Description

### Field of the Invention

The present invention relates to an agricultural sprayer and a method of operating such a sprayer.

### Background of the Invention

Agricultural sprayers are used in the application of various materials to field crops. Such systems apply various chemicals in the form of a spray for the purposes of crop protection, e.g. through the use of appropriate pesticides or herbicides, or for the purposes of promoting plant growth, e.g. through use of liquid plant fertiliser. Agricultural sprayers may be provided as self-propelled sprayers, or as systems to be mounted to an agricultural tractor, e.g. as a towed or hitch-mounted implement.

One of the primary concerns in the use of potentially harmful chemicals such as pesticides or fertilisers is that proper cleaning and maintenance of sprayers is necessary to avoid injury to non-target crop species, e.g. through the incorrect application of residual chemicals from a preceding sprayer operation. Accordingly, sprayer operators must pay close attention to proper cleaning and sterilisation procedures, to prevent contamination or injury to crops or to the environment in general.

Such cleaning procedures often require the rinsing of the sprayer systems with a large volume of rinse water and/or chemical cleaning solution to ensure safe concentration levels in the sprayer. However, such excessive use of water and cleaning solutions can be relatively wasteful, as well resulting in increased cost levels for sprayer operators. In addition, sprayers can often be required to return to a centralised depot for a cleaning operation, if the relatively large volumes of rinse water or cleaning solutions are too bulky to transport with the sprayer itself.

WO-2015/020307 discloses an unmanned spray system that uses water in a nozzle washing process after a spray operation. US-2003/150933 discloses an ozone system for agricultural applications wherein ozone is applied to crops using spraying apparatus. US-2014/245663 discloses another system for treating crops with ozone.

It is an object of the invention to provide an agricultural sprayer and a method of operating such a sprayer having an improved sprayer cleaning process.

### Summary of the Invention

Accordingly, there is provided a method of operating an agricultural sprayer, the agricultural sprayer comprising a liquid tank to hold a spray liquid and a spray applicator system coupled to the liquid tank, the method comprising the steps of:
supplying a spray liquid from the liquid tank to the spray applicator system to perform a spraying operation, and
after the spraying operation is complete, supplying ozone to clean at least a portion of the agricultural sprayer.

The use of ozone allows for a relatively simple and cost-effective mechanism for the cleaning of agricultural sprayers as well as the sterilisation of the spay liquid used in such sprayers. It will be understood that the spray liquid may comprise a fertiliser chemical, or any known pesticide, herbicide or fungicide used for crop protection. It will be understood that the spray liquid itself does not comprise ozone.

Preferably, the method comprises the step of generating ozone using an ozone generator for supply to the at least a portion of the agricultural sprayer.

The sprayer may be provided with an on-board ozone generator, to produce ozone on site during or immediately after a spraying operation. The use of an on-board generator eliminates the need to transport cleaning material storage containers with the sprayer itself, and allows for a more efficient design of the sprayer system, resulting in reduced weight and size, and providing improved flexibility to perform sprayer cleaning operations. Such an ozone generator may comprise any suitable generator design, e.g. a corona discharge method generator, an ultraviolet light generator, a cold plasma generator, and electrolytic generator.

Additionally or alternatively, the method comprises the step of supplying ozone from an ozone supply tank provided on the agricultural sprayer.

The sprayer may be provided with an ozone storage tank arranged to hold ozone for use in sprayer cleaning operations. Such a storage tank may be filled with ozone using an on-board ozone generator, e.g. in parallel to a spraying operation, to ensure immediate supply of a pre-generated volume of ozone when a cleaning operation is requested. Additionally or alternatively, the storage tank may be filled with ozone by connection to a separate central ozone generator, e.g. prior to the sprayer leaving a central depot for a field spraying operation.

Preferably, the method comprises the step of supplying ozone to at least a portion of the spray applicator system, to clean at least a portion of the spray applicator system.

Preferably, the spray applicator system comprises a nozzle array arranged along a length of at least one spray boom, and sprayer plumbing connecting the nozzle array with the liquid tank, wherein the method further comprises the step of supplying ozone to the spray applicator system at discrete locations along the length of the spray boom.

By supplying ozone at spaced locations along the length of the sprayer boom, accordingly it is ensured that a safe concentration of ozone is provided at all locations along the boom.

Preferably, the method comprises the step of injecting ozone into the sprayer plumping at discrete locations along the length of the spray boom.

Alternatively, ozone may be injected at a single location on the boom, wherein turbulence in the fluid stream may be utilised to sufficiently mix the ozone into the fluid stream. It will be understood that suitable baffles may be provided in the spray plumbing in order to increase the mixing rate of the ozone in the fluid stream.

Preferably, the method further comprises the step of rinsing at least a portion of the spray applicator system using a rinse fluid after the spraying operation is complete, to at least partly rinse the spray applicator system of spray liquid.

It will be understood that the step of rinsing comprises circulating a fluid in the spray applicator system, preferably through the sprayer plumbing while the nozzle array is closed, to ensure fluid flow throughout the spray applicator system. The ozone can then be supplied to the fluid during such a circulation stage, to effectively cleanse the interior of the spray applicator system.

Preferably, the step of rinsing comprises supplying rinse water from a rinse water tank provided on the agricultural sprayer.

Additionally or alternatively, the step of rinsing comprises supplying compressed air from a compressed air supply device provided on the agricultural sprayer.

In a preferred embodiment, the method comprises the steps of:
after the spraying operation is complete, supplying compressed air to the spray applicator system to flush at least a portion of spray liquid from the spray applicator system,
subsequently supplying rinse water to the spray applicator system, and
supplying ozone to the rinse water to clean the spray applicator system.

It will be understood that, in the step of supplying compressed air to flush the spray applicator system, spray liquid contained in the spray applicator system may be flushed to ground or to an auxiliary tank. This ensures that the residual spray liquid in the spray applicator system is minimised, which reduces the cleaning effort required to effectively clean or sterilise the spray applicator system.

In one aspect of the invention, the sprayer comprises an auxiliary liquid tank arranged to receive residual spray liquid from the spray applicator system after a spraying operation, and wherein the method comprises the step of supplying ozone to the auxiliary liquid tank from the ozone supply to sterilise the residual spray liquid in the auxiliary tank.

By providing an auxiliary tank to receive residual spray liquid after a spraying operation, the act of cleaning or sterilising the chemicals in the residual spray liquid can be confined to the auxiliary tank, thereby allowing further operations to be performed while the residual spray liquid is being cleansed.

In a preferred embodiment, where the sprayer comprises an auxiliary liquid tank, the method comprises the further steps of:
performing a first spraying operation using a first spray liquid supplied from a liquid tank to the spray applicator system;
rinsing the first spray liquid to the auxiliary liquid tank after the first spray operation;
performing a second spraying operation using a second spray liquid supplied from a liquid tank to the spray applicator system; and
performing a cleaning operation by supplying ozone to the auxiliary liquid tank to cleanse the first spray liquid of chemicals, said cleaning operation performed in parallel with said second spraying operation.

By rinsing, draining, or flushing the first spray liquid to the auxiliary liquid tank, the cleaning or sterilisation of the residual spray liquid can be performed in the auxiliary tank, such that the spray applicator system is then free to be used for a second spraying
operation at the same time as the initial cleaning operation. This allows for more efficient use of the sprayer, as further spraying operations can be performed in parallel with the cleaning process required from a preceding spraying operation, using a different chemical spray liquid.

Preferably, the step of supplying ozone to clean at least a portion of the agricultural sprayer is performed until a chemical concentration of spray liquid is reduced to a safe level.

In one aspect, the step of supplying ozone is performed for a predetermined length of time to ensure a safe concentration of spray liquid is achieved.

The sprayer may be provided with predetermined time durations and/or chemical concentration levels, to ensure that a cleaning operation is performed until the spray applicator system is sufficiently clean and/or the residual spray liquid is sufficiently sterilised.

In an additional or alternative aspect, the method comprises the steps of:
monitoring the level of chemical concentration of spray liquid in the agricultural sprayer; and
continuing to supply ozone to clean at least a portion of the agricultural sprayer until the monitored level of chemical concentration of spray liquid in the agricultural sprayer reaches a predefined safe level.

Additionally or alternatively, the method may comprise the further step of receiving a user-defined time duration or chemical concentration level, from a user input device.

There is further provided an agricultural sprayer comprising:
a liquid tank to hold a spray liquid; and
a spray applicator system coupled to the liquid tank, to apply spray liquid from the agricultural sprayer as part of a spraying operation,
wherein the agricultural sprayer further comprises an ozone supply arranged to provide ozone to the sprayer, to clean at least a portion of the agricultural sprayer after a spraying operation.

The use of ozone allows for a relatively simple and cost-effective mechanism for the cleaning of agricultural sprayers as well as the sterilisation of the spay liquid used in such sprayers. It will be understood that the spray liquid may comprise any known pesticide, herbicide or fungicide used for crop protection, or any suitable liquid fertiliser. Preferably, the agricultural sprayer comprises a self-propelled sprayer apparatus, but it will be understood that the invention may also apply to a tractor-mounted spray system, e.g. for use as a hitch-mounted implement or as a towed sprayer system.

Preferably, the ozone supply comprises an ozone generator provided as part of the agricultural sprayer.

Additionally or alternatively, the ozone supply comprises an ozone tank to hold ozone, the ozone tank provided as part of the agricultural sprayer, and coupled with the spray applicator system.

In one aspect, the ozone supply is arranged to supply ozone to at least a portion of the spray applicator system.

Preferably, the spray applicator system comprises:
a nozzle array arranged along a length of at least one spray boom, and
sprayer plumbing connecting the nozzle array with the liquid tank.

Preferably, the ozone supply is configured such that ozone is supplied to the spray applicator system at discrete locations along the length of the spray boom.

Preferably, the ozone supply comprises a plurality of ozone injectors, wherein the ozone injectors are arranged to inject ozone into the sprayer plumbing at discrete locations spaced along the length of the spray boom.

Preferably, the agricultural sprayer comprises a rinse fluid supply arranged to supply a rinse fluid to the spray applicator system after a spraying operation, to at least partly rinse the spray applicator system of spray liquid.

The rinse fluid may comprise any fluid suitable for the purpose of rinsing a spray liquid from a spray applicator system, e.g. rinse water and/or compressed air or other gas.

In one aspect, the rinse fluid supply comprises a rinse water tank to hold rinse water.

Additionally or alternatively, the rinse fluid supply comprises an air supply, preferably a compressed air supply device.

In an additional or alternative aspect, the agricultural sprayer further comprises an auxiliary liquid tank arranged to receive residual spray liquid from the spray applicator system after a spraying operation, wherein ozone is provided to the auxiliary liquid tank from the ozone supply to sterilise residual spray liquid contained in the auxiliary tank.

Preferably, the sprayer is configured to perform a cleaning operation in the auxiliary liquid tank using ozone supplied to the auxiliary liquid tank on a first residual spray liquid from a first spraying operation, wherein the cleaning operation is performed in parallel with a second spraying operation performed using second spray liquid supplied from a liquid tank to the spray apparatus.

Preferably, the sprayer is configured such that ozone is supplied for a predetermined length of time to ensure a safe concentration of residual spray liquid is achieved.

Additionally or alternatively, the sprayer comprises at least one chemical concentration sensor arranged to detect the level of chemical concentration in residual spray liquid in the spray applicator system, wherein the sprayer is configured such that ozone is supplied until a safe chemical concentration level of residual spray liquid is achieved.

Additionally or alternatively, the sprayer comprises a user input device arranged to receive a user-defined time duration or chemical concentration level, from a user input device.

The agricultural sprayer further comprises a controller coupled with the spray applicator system and with the ozone supply, the controller arranged to implement the steps of the method as described above.

### Detailed Description of the Invention

Embodiments of the invention will now be described, by way of example only, with reference to the accompanying drawings, in which:
Fig. 1 is an illustration of an agricultural crop sprayer according to an aspect of the invention;
Fig. 2 is a schematic drawing of a spray applicator system according to a first embodiment of the invention, for use with the sprayer of Fig. 1;
Fig. 3 is a process diagram for an operating method of the spray applicator system of Fig. 2;
Fig. 4 is a schematic drawing of a spray applicator system according to a further embodiment of the invention, for use with the sprayer of Fig. 1; and
Fig. 5 is a process diagram for an operating method of the spray applicator system of Fig. 4.

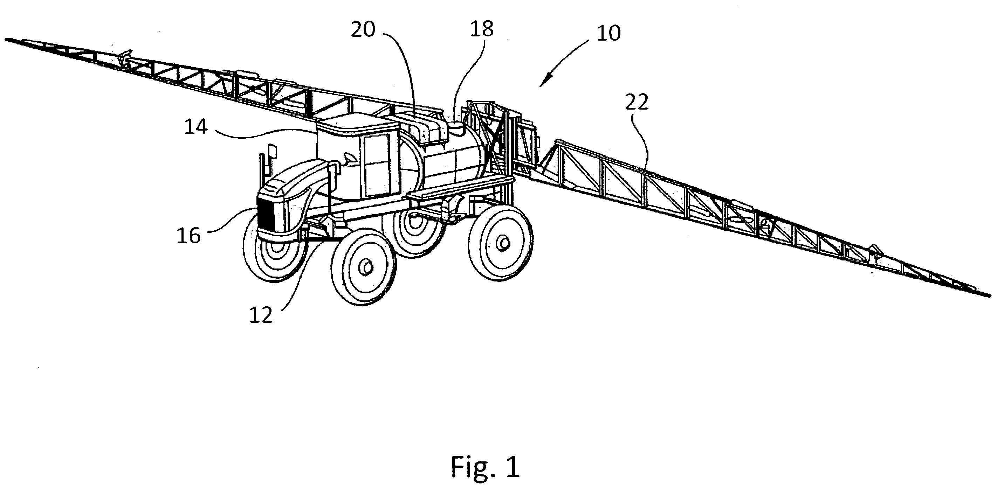

Fig. 1 shows an agricultural crop sprayer 10 used to deliver chemicals to agricultural crops in a field. Agricultural sprayer 10 comprises a chassis 12 and a cab 14 mounted on the chassis 12. Cab 14 may house an operator and a number of controls for the agricultural sprayer 10. An engine 16 may be mounted on a forward portion of chassis 12 in front of cab 14 or may be mounted on a rearward portion of the chassis 12 behind the cab 14. The engine 16 may comprise, for example, a diesel engine or a gasoline powered internal combustion engine. The engine 16 provides energy to propel the agricultural sprayer 10 and also can be used to provide energy used to spray fluids from the sprayer 10.

Although a self-propelled application machine is shown and described hereinafter, it should be understood that the embodied invention is applicable to other agricultural sprayers including pull-type or towed sprayers and mounted sprayers, e.g. mounted on a 3-point linkage of an agricultural tractor.

The sprayer 10 further comprises a liquid storage tank 18 used to store a spray liquid to be sprayed on the field. The spray liquid can include chemicals, such as but not limited to, herbicides, pesticides, and/or fertilizers. Liquid storage tank 18 is to be mounted on chassis 12, either in front of or behind cab 14. The crop sprayer 10 can include more than one storage tank 18 to store different chemicals to be sprayed on the field. The stored chemicals may be dispersed by the sprayer 10 one at a time or different chemicals may be mixed and dispersed together in a variety of mixtures. The sprayer 10 further comprises a rinse water tank 20 used to store clean water, which can be used for storing a volume of clean water for use to rinse the plumbing and main tank 18 after a spraying operation.

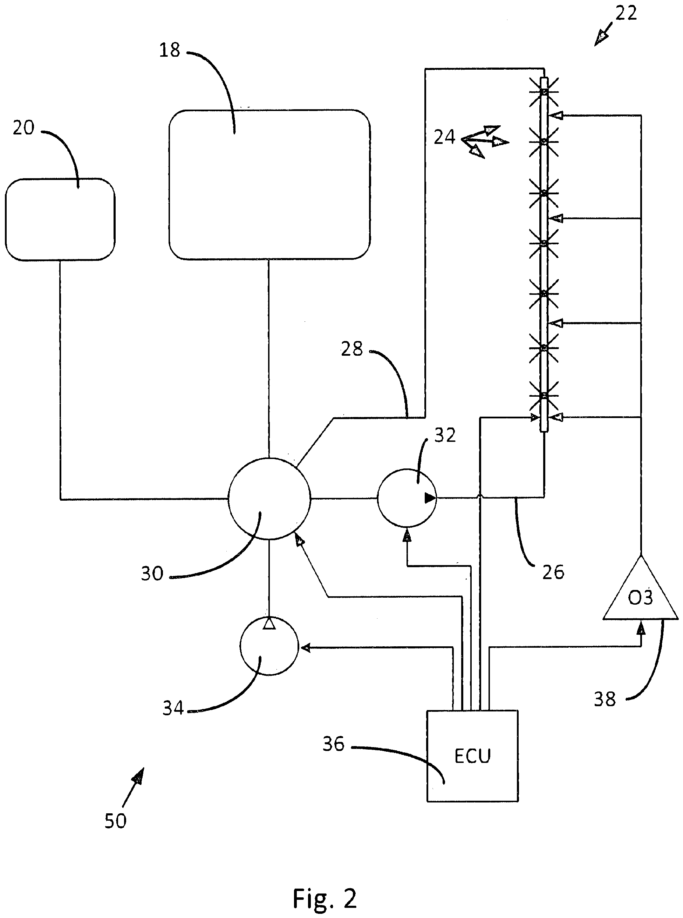

At least one boom arm 22 on the sprayer 10 is used to distribute the fluid from the liquid tank 18 over a wide swath as the sprayer 10 is driven through the field. The boom arm 22 is provided as part of a spray applicator system, which further comprises an array of spray nozzles 24 (Fig. 2) arranged along the length of the boom arm 22 and suitable sprayer plumping 26,28 (Fig. 2) used to connect the liquid storage tank 18 with the spray nozzles 24. The sprayer plumping will be understood to comprise any suitable tubing or piping arranged for fluid communication on the sprayer 10.

A spray applicator system according to one aspect of the invention is illustrated in a schematic outline in Fig. 2 at 50. In the illustrated embodiment, the liquid tank 18 and the rinse water tank 20 are connected with a valve system 30, which can controls the supply of liquid from either of the tanks 18,20, and/or the direction of flow. The valve system 30 can comprise any suitable configuration of valve elements, e.g. a single multi-port valve element, or an array of individual elements.

The valve system 30 is connected with the nozzles 24 of the boom arm 22 via a feed line or channel 26 of the sprayer plumbing. A further recirculation channel or return channel 28 extends from the boom arm 22 to the valve system 30, allowing for a recirculation of liquid in the spray applicator system 50. The system further comprises a pump 32 which acts to circulate liquid from either of the tanks 18,20 through the sprayer plumbing. The pump 32 can be driven by the engine 16 or any other suitable power source. An example of the relationship between the tank and pump of a suitable spray applicator system can be found in US Patent 5,337,959, the disclosure of which is incorporated by reference herein.

In the illustrated embodiment of the invention, the spray applicator system 50 further comprises a compressed air supply 34, e.g. a compressed air pump, which is coupled with the valve system 30 to provide for selective supply of compressed air to various sections of the sprayer plumbing. It will be understood that other embodiments of the invention may omit the use of the compressed air supply 34 from the spray applicator system 50.

The spray applicator system 50 further comprises an electronic control unit (ECU) 36, which is configured to control the operation of the various components of the system, e.g. the valve system 30, the pump 32, the compressed air supply 34, and the components of the boom arm 22 including the spray nozzles 24 and the boom arm 22 position. The ECU 36 can operate in response to commands issued by an operator in the sprayer cab 14, or based on pre-programmed operating routines, which may be triggered by operator action.

The spray applicator system 50 further comprises an ozone supply 38. The ozone supply 38 may be provided as an ozone generator located on the sprayer 10 itself, and may comprise any suitable ozone generator design, e.g. a corona discharge method generator, an ultraviolet light generator, a cold plasma generator, and electrolytic generator. Additionally or alternatively, the ozone supply 38 may be provided as an on-board storage tank located on the sprayer 10, the ozone storage tank arranged to supply ozone to the sprayer 10. Such a storage tank may be used to temporarily store ozone generated by an on-board ozone generator, or to receive ozone from a separate ozone generator just prior to the sprayer leaving a central depot to perform a spraying operation.

The ozone supply 38 may be operated by the ECU 36, and is configured to supply ozone to at least a portion of the spray applicator system 50, in order to clean and sterilise residual spray liquid and/or the spray applicator system 50, after a spraying operation has completed.

Ozone is a relatively strong oxidant and disinfectant which is suitable for the treatment of aqueous solutions and gaseous mixtures, which is partially soluble in water. Accordingly, ozone is particularly suitable for the cleaning of the internal tubing and plumbing of a crop sprayer. In addition, after ozone oxidizes or disinfects, it decomposes into oxygen, leaving no harmful by-products. As a result, the use of an ozone supply to perform a cleaning operation of a crop sprayer presents a simple, cost-effective, and safe cleaning system for a crop sprayer, which can be relatively easily incorporated into existing sprayer designs.

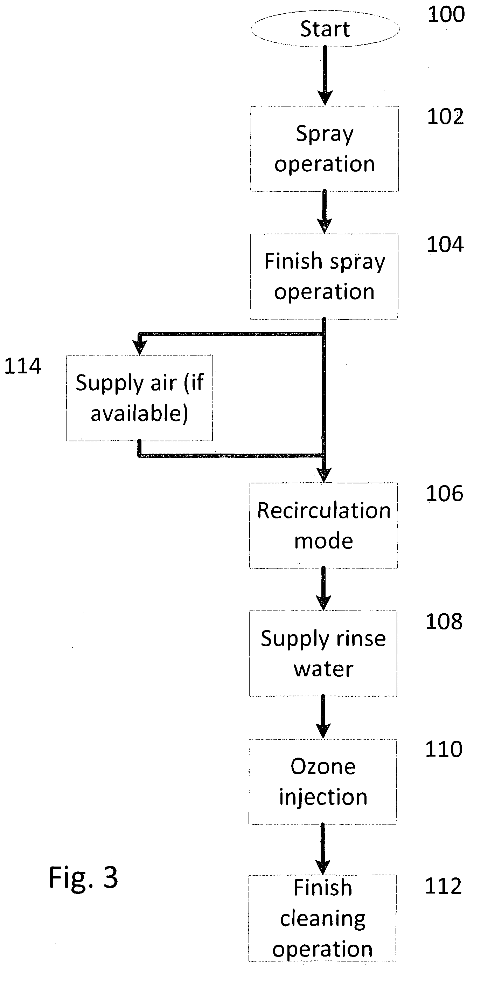

A method for use with the embodiment of Fig. 2 is now described, with reference to the process illustrated in Fig. 3. After start of the sprayer 10, step 100, a spraying operation is performed, step 102, wherein spray liquid is supplied from the liquid tank 18 via the valve system 30 and the feed line 26 to the boom arm 22, for application as a spray from the spray nozzles 24. When the spraying operation is completed, step 104, the valve system 30 shuts off the supply of spray liquid to the boom arm 22. At this point, the ECU 36 is configured to start a cleaning operation of the spray applicator system 50.

The ECU 36 commands the array of spray nozzles 24 to close, such that the spray applicator system 50 can be put into recirculation mode, step 106. The ECU 36 then configures the valve system 30 such that clean rinse water can be supplied from the rinse water tank 20 to the spray plumbing 26,28 and the boom arm 22, and can be recirculated through the associated tubing using the pump 32, step 108.

As rinse water is being circulated in the plumbing, the ECU 36 instructs the ozone supply 38 to inject ozone into the recirculating fluid, step 110. The ozone is supplied such that the concentration level of ozone in the recirculating fluid acts to ensure that the interior of the spray applicator system 50 is cleaned of all hazardous or undesirable substances, and that the chemical concentration of any remaining spray liquid is reduced to a safe level. The ECU 36 is then arranged to stop the recirculation mode, and to allow the safe liquid to be drained or flushed from the spray applicator system, step 112, ready for a further spraying operation.

It will be understood that the sprayer 10 may comprise at least one chemical sensor arranged to detect the chemical concentration of the recirculating fluid, wherein the ECU 36 is configured to continue the recirculation of the rinse water and ozone until the detected concentration level is reduced to a safe level. Additionally or alternatively, the ECU 36 is configured to maintain recirculation of the rinse water and ozone for a predefined time period, to ensure that all concentration levels are reduced to a safe level.

It will be further understood that the concentration levels and/or time periods may be adjustable, either by the sprayer operator, or based on the type and/or concentration of spray liquid used in the spray applicator system 50.

The ozone may be injected from the supply 38 into the circulating liquid at a single location, but in a preferred embodiment, the spray applicator system 50 is configured such that the ozone supply 38 can inject ozone into the circulating liquid at a plurality of different locations. Such distributed injection of ozone ensures that an effective concentration of ozone is supplied at all locations of the spray applicator system 50, in particular in the spray plumbing of the system. In the illustrated embodiment of Fig. 2, the ozone supply 38 is configured to inject ozone into the spray plumbing at a number of locations spaced along the length of the boom arm 22.

In a preferred embodiment, where the spray applicator system 50 comprises a compressed air supply 34 as shown in Fig. 2, an additional step may be performed between the end of the spraying operation (104) and the start of the recirculation mode (106). In this case, when the spraying operation has completed, the ECU 36 instructs the air supply 34 and the connected valve system 30 to supply compressed air to the spray plumbing 26,28, step 114, such that residual spray liquid remaining in the plumbing system after the spray operation can be blown out through the nozzles 24 to ground. This acts to reduce the volume of fluid to be cleansed from the system. Once the compressed air has been cycled through the spray applicator system 50, the ECU 36 can then shut off the compressed air supply 34, before continuing the remainder of the process by entering the recirculation mode as described above for step 106.

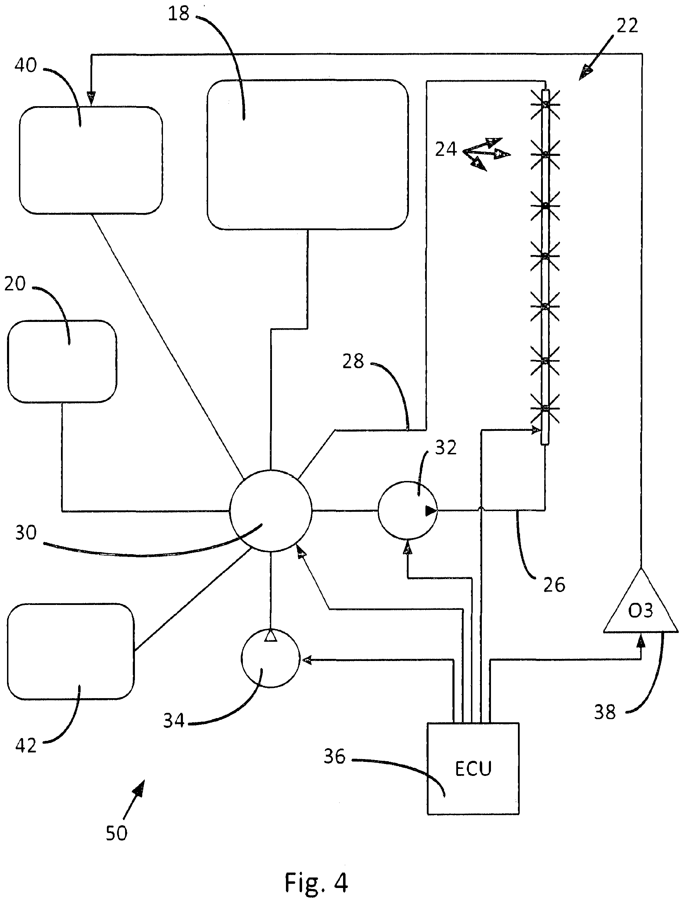

A further embodiment of spray applicator system is illustrated in Fig. 4, where elements in common with the embodiment of Fig. 2 are provided with the same reference numerals. In the embodiment of Fig. 4, the spray applicator system 50 is provided with an auxiliary liquid tank 40, which is connected to the valve system 30. The auxiliary liquid tank 40 is arranged to receive a fluid to be cleaned after a spraying operation, wherein the ozone supply 38 is configured to supply ozone to the auxiliary tank 40 to clean any such contained fluid. The spray applicator system 50 may be provided with an additional liquid tank 42, to store an additional spray liquid for use in a second spraying operation, as described below.

While the embodiment of Fig. 4 shows the ozone supply 38 connected with the auxiliary liquid tank 40, it will be understood that the features of the embodiments of Figs. 2 and 4 may be combined, such that the ozone supply 38 is configured to be connected with both an auxiliary liquid tank 40 and the sprayer boom arm 22. In addition, while the schematic outlines of Figs. 2 and 4 show a single boom arm 22, it will be understood that the sprayer 10 may be provided with a plurality of separate boom arms and associated spray nozzles and plumbing.

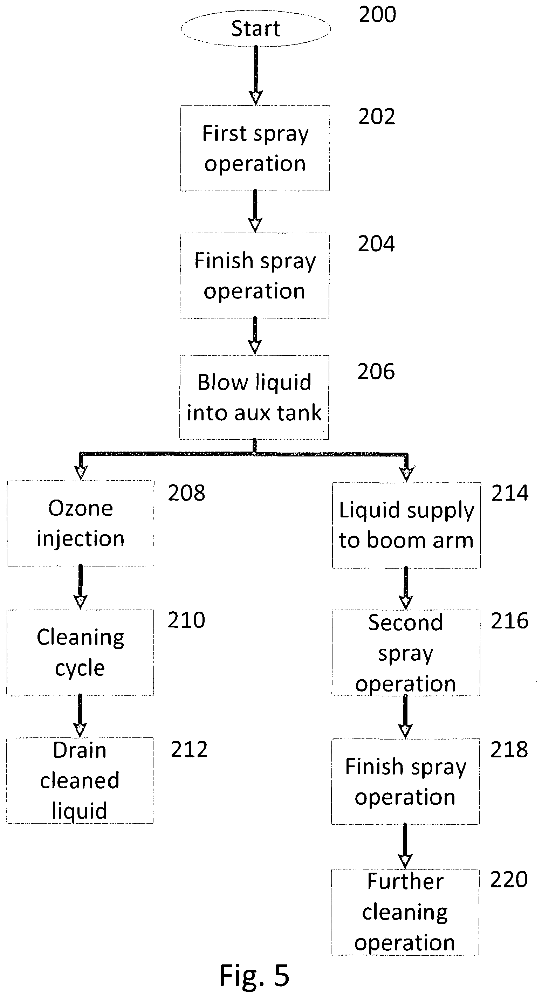

With reference to Fig. 5, a method of operation of the system illustrated in Fig. 4 is now described.

After start of the sprayer 10, step 200, a first spraying operation is performed, step 202, wherein spray liquid is supplied from the liquid tank 18 via the valve system 30 and the feed line 26 to the boom arm 22, for application as a spray from the spray nozzles 24. When the spraying operation is completed, step 204, the valve system 30 shuts off the supply of spray liquid to the boom arm 22. At this point, the ECU 36 is configured to start a cleaning operation of the spray applicator system 50.

The ECU 36 commands the array of spray nozzles 24 to close, such that compressed air can be blown through the spray applicator system 50 from the compressed air supply 36, step 206. The ECU 36 controls the valve system 30 such that any residual spray liquid remaining in the spray applicator system 50 after the spray operation is blown into the auxiliary liquid tank 40.

At this point, the ECU 36 commands the ozone supply 38 to inject ozone into the auxiliary tank 40, step 208, to cleanse the residual spray liquid of chemicals. As with the embodiment described in Figs. 2 and 3, the ozone injection may be performed for a defined period of time, and/or until a monitored chemical concentration level of the liquid contained in the auxiliary tank 40 reaches a safe level, step 210. At this point, the cleaned and sterilised liquid in the tank 40 may be drained, e.g. to ground, step 212.

In order to monitor the chemical concentration level of the contained liquid, the system may be arranged to measuring the difference between input and output mass flows of ozone supplied to the system. When the supplied ozone mass flow input is equal to the output, accordingly this indicates that the chemical concentration is very low, as the level of reaction of the ozone with any remaining chemical is reduced.

In parallel with the ozone injection and liquid clean steps, 208,210, the sprayer 10 can be configured to perform a second spray operation using the spray applicator system 50, while a cleaning operation is being performed for the first spray operation. Accordingly, while the ECU 36 is commanding the ozone supply 38 to inject ozone to the auxiliary tank 40, step 208, the ECU 36 can also command that a spray liquid is supplied to the boom arm 22, step 214. The ECU 36 can then act to open the spray nozzles 24 of the boom 22, in accordance with a second spray operation, step 216.

It will be understood that the second spray operation may be performed using several alternative approaches. In one aspect, the sprayer may be reloaded with a "hot mix" of water and chemical already mixed at a local farm or facility. Alternatively, the sprayer may be loaded with water, while chemicals are added using an educator mounted on the sprayer, or mounted on a water supply truck. Further alternatively, the sprayer may be loaded with water and a direct chemical injection system can be used to inject chemicals into the water just prior to spraying, when the water is already in the boom plumbing. It will be further understood that the spray liquid used in the second spray operation may be supplied from the liquid tank 18, or from a secondary liquid tank 42 which can be coupled with the valve system 30. The second spray liquid may be a different liquid than that used in the first spray operation, or may be the same liquid, but mixed in a different concentration or used in combination with additional spray liquids.

When the spraying operation is completed, step 218, the valve system 30 shuts off the supply of spray liquid to the boom arm 22. At this point, the ECU 36 can be arranged to start a further cleaning operation of the spray applicator system 50, step 220, to clean any residual spray liquid remaining after the second spray operation 216. Such a further cleaning operation may be performed through use of the auxiliary tank 40, as described in steps 206-212, and/or through use of ozone injection into a fluid recirculation mode, as described in steps 106-112 of Fig. 3.

The use of an ozone supply in a cleaning operation for an agricultural crop sprayer allows for a relatively simple and cost-effective mechanism for the cleaning of agricultural sprayers as well as the sterilisation of the spay liquid used in such sprayers. The ozone supply may be relatively easily designed as part of a crop sprayer system, with appropriate cleaning steps relatively easily incorporated into sprayer operations.

## Claims

1. A method of operating an agricultural sprayer, the agricultural sprayer (10) comprising a liquid tank (18) to hold a spray liquid and a spray applicator system (50) coupled to the liquid tank (18), the method comprising the step of supplying a spray liquid from the liquid tank (18) to the spray applicator system (50) to perform a spraying operation, **characterised in that** the method further comprises the step of, after the spraying operation is complete, supplying ozone to clean at least a portion of the agricultural sprayer (10).

2. The method of claim 1, comprising the step of generating ozone using an ozone generator for supply to the at least a portion of the agricultural sprayer.

3. The method of claim 1 or claim 2, comprising the step of supplying ozone to at least a portion of the spray applicator system (50), to clean at least a portion of the spray applicator system.

4. The method of any one of claims 1-3, wherein the spray applicator system (50) comprises a nozzle array (24) arranged along a length of at least one spray boom (22), and sprayer plumbing connecting the nozzle array (24) with the liquid tank (18), and wherein the method further comprises the step of supplying ozone to the spray applicator system at discrete locations along the length of the spray boom (22).

5. The method of claim 4, wherein the method comprises the step of injecting ozone into the sprayer plumping at discrete locations along the length of the spray boom.

6. The method of any one of claims 1-5, wherein the method further comprises the step of rinsing at least a portion of the spray applicator system (50) using a rinse fluid after the spraying operation is complete, to at least partly rinse the spray applicator system of spray liquid.

7. The method of claim 6, wherein the step of rinsing comprises supplying at least one of rinse water from a rinse water tank (20) provided on the agricultural sprayer, or compressed air from a compressed air supply device (36) provided on the agricultural sprayer.

8. The method of any one of claims 1-7, wherein the method comprises the steps of:
after the spraying operation is complete, supplying compressed air to the spray applicator system to flush at least a portion of spray liquid from the spray applicator system,
subsequently supplying rinse water to the spray applicator system, and
supplying ozone to the rinse water to clean the spray applicator system.

9. The method of any one of claims 1-8, wherein the sprayer (10) comprises an auxiliary liquid tank (40) arranged to receive residual spray liquid from the spray applicator system after a spraying operation, and wherein the method comprises the step of supplying ozone to the auxiliary liquid tank (40) from the ozone supply to sterilise the residual spray liquid in the auxiliary tank (40).

10. The method of claim 9, where the sprayer comprises an auxiliary liquid tank (40), the method comprises the further steps of:
performing a first spraying operation using a first spray liquid supplied from a liquid tank (18) to the spray applicator system;
rinsing the first spray liquid to the auxiliary liquid tank (40) after the first spray operation;
performing a second spraying operation using a second spray liquid supplied from a liquid tank to the spray applicator system; and
performing a cleaning operation by supplying ozone to the auxiliary liquid tank to cleanse the first spray liquid of chemicals, said cleaning operation performed in parallel with said second spraying operation.

11. The method of any one of claims 1-10, wherein the method comprises the steps of:
monitoring the level of chemical concentration of spray liquid in the agricultural sprayer; and
continuing to supply ozone to clean at least a portion of the agricultural sprayer until the monitored level of chemical concentration of spray liquid in the agricultural sprayer reaches a predefined safe level.

12. The method of any one of claims 1-11, wherein the step of supplying ozone is performed for a predetermined length of time to ensure a safe concentration of spray liquid is achieved.

13. An agricultural sprayer (10) comprising:
a liquid tank (18) to hold a spray liquid;
a spray applicator system (50) coupled to the liquid tank (18), to apply spray liquid from the agricultural sprayer as part of a spraying operation; and
a controller (36) coupled with the spray applicator system (50),
**characterised in that** the agricultural sprayer further comprises an ozone supply (38) coupled to the controller (36) and arranged to provide ozone to the sprayer, and **in that** the controller is arranged to implement the steps of the method as described in any one of claims 1-12 to clean with the ozone at least a portion of the agricultural sprayer after a spraying operation.

14. The agricultural sprayer of claim 13, wherein the ozone supply (38) comprises an ozone generator provided as part of the agricultural sprayer.

15. The agricultural sprayer of claim 13 or claim 14, wherein the ozone supply (38) comprises an ozone tank to hold ozone, the ozone tank provided as part of the agricultural sprayer, and coupled with the spray applicator system.

16. The agricultural sprayer of any one of claims 13-15, wherein the spray applicator system (50) comprises:
a nozzle array (24) arranged along a length of at least one spray boom (22), and
sprayer plumbing connecting the nozzle array (24) with the liquid tank (18), and
wherein the ozone supply (38) is configured such that ozone is supplied to the spray applicator system at discrete locations along the length of the spray boom (22).

17. The agricultural sprayer of claim 16, wherein the ozone supply (38) comprises a plurality of ozone injectors, wherein the ozone injectors are arranged to inject ozone into the sprayer plumbing at discrete locations spaced along the length of the spray boom (22).

18. The agricultural sprayer of any one of claims 13-17, wherein the agricultural sprayer (10) comprises a rinse fluid supply arranged to supply a rinse fluid to the spray applicator system after a spraying operation, to at least partly rinse the spray applicator system of spray liquid, wherein the rinse fluid supply comprises at least one of a rinse water tank (20) to hold rinse water, or an air supply, preferably a compressed air supply device.

19. The agricultural sprayer of any one of claims 13-18, wherein the agricultural sprayer further comprises an auxiliary liquid tank (40) arranged to receive residual spray liquid from the spray applicator system after a spraying operation, wherein ozone is provided to the auxiliary liquid tank (40) from the ozone supply to sterilise residual spray liquid contained in the auxiliary tank.

20. The agricultural sprayer of any one of claims 13-19, wherein the sprayer comprises at least one chemical concentration sensor arranged to detect the level of chemical concentration in residual spray liquid in the spray applicator system, wherein the sprayer is configured such that ozone is supplied until a safe chemical concentration level of residual spray liquid is achieved.

## Patentansprüche

1. Verfahren zum Betreiben eines landwirtschaftlichen Sprühers, wobei der landwirtschaftliche Sprüher (10) einen Flüssigkeitstank (18) zum Fassen einer Sprühflüssigkeit und ein an den Flüssigkeitstank (18) gekoppeltes Sprühapplikatorsystem (50) aufweist, wobei das Verfahren den Schritt eines Bereitstellens einer Sprühflüssigkeit von dem Flüssigkeitstank (18) an das Sprühapplikatorsystem (50) aufweist, um einen Sprühbetrieb auszuführen, **dadurch gekennzeichnet, dass** das Verfahren, nachdem der Sprühbetrieb abgeschlossen ist, weiterhin den Schritt aufweist, Ozon bereitzustellen, um mindestens einen Teil des landwirtschaftlichen Sprühers (10) zu reinigen.

2. Verfahren nach Anspruch 1, **weiterhin** mit dem Schritt eines Generierens von Ozon unter Verwenden eines Ozongenerators zur Bereitstellung an den mindestens einen Teil des landwirtschaftlichen Sprühers.

3. Verfahren nach Anspruch 1 oder Anspruch 2, mit dem Schritt eines Bereitstellens von Ozon an mindestens einen Teil des Sprühapplikatorsystems (50), um mindestens einen Teil des Sprühapplikatorsystems zu reinigen.

4. Verfahren nach einem der Ansprüche 1 bis 3, **wobei** das Sprühapplikatorsystem (50) ein Düsenarray (24), das entlang einer Länge mindestens eines Sprühauslegers (22) angeordnet ist, und ein Sprüherleitungssystem, das das Düsenarray (24) mit dem Flüssigkeitstank (18) verbindet, aufweist und wobei das Verfahren weiterhin den Schritt eines Bereitstellens von Ozon an das Sprühapplikatorsystem an bestimmten Positionen entlang der Länge des Sprühauslegers (22) aufweist.

5. Verfahren nach Anspruch 4, **wobei** das Verfahren den Schritt eines Injizierens von Ozon in das Sprüherleitungssystem an diskreten Positionen entlang der Länge des Sprühauslegers aufweist.

6. Verfahren nach einem der Ansprüche 1 bis 5, **wobei** das Verfahren, nachdem der Sprühbetrieb vollendet ist, weiterhin den Schritt eines Spülens mindestens eines Teils des Sprühapplikatorsystems (50) unter Verwenden eines Spülfluids aufweist, um die Sprühflüssigkeit zumindest teilweise aus dem Sprühapplikatorsystem zu spülen.

7. Verfahren nach Anspruch 6, **wobei** der Schritt des Spülens ein Bereitstellen von Spülwasser aus einem auf dem landwirtschaftlichen Sprüher bereitgestellten Spülwassertank (20) und/oder von Druckluft aus einer auf dem landwirtschaftlichen Sprüher bereitgestellten Druckluft-Bereitstellungsvorrichtung (36) aufweist.

8. Verfahren nach einem der Ansprüche 1 bis 7, **wobei** das Verfahren die Schritte aufweist:
nachdem der Sprühbetrieb vollendet ist, Bereitstellen von Druckluft an das Sprühapplikatorsystem, um mindestens einen Teil der Sprühflüssigkeit von dem Sprühapplikatorsystem auszublasen,
anschließend Bereitstellen von Spülwasser an das Sprühapplikatorsystem und
Bereitstellen von Ozon an das Spülwasser, um das Sprühapplikatorsystem zu reinigen.

9. Verfahren nach einem der Ansprüche 1 bis 8, **wobei** der Sprüher (10) einen zusätzlichen Flüssigkeitstank (40) aufweist, der eingerichtet ist, um nach einem Sprühbetrieb überschüssige Sprühflüssigkeit von dem Sprühapplikatorsystem zu empfangen, und wobei das Verfahren den Schritt eines Bereitstellens von Ozon von der Ozonbereitstellung an den zusätzlichen Flüssigkeitstank (40) aufweist, um die überschüssige Sprühflüssigkeit in dem zusätzlichen Tank (40) zu sterilisieren.

10. Verfahren nach Anspruch 9, **wobei** der Sprüher einen zusätzlichen Flüssigkeitstank (40) aufweist, wobei das Verfahren die weiteren Schritte aufweist:
Ausführen eines ersten Sprühbetriebs unter Verwenden einer ersten Sprühflüssigkeit, die aus einem Flüssigkeitstank (18) an das Sprühapplikatorsystem bereitgestellt wird;
Spülen der ersten Sprühflüssigkeit zu dem zusätzlichen Flüssigkeitstank (40) nach dem ersten Sprühbetrieb;
Ausführen eines zweiten Sprühbetriebs unter Verwenden einer zweiten Sprühflüssigkeit, die aus dem Flüssigkeitstank an das Sprühapplikatorsystem bereitgestellt wird; und
Ausführen eines Reinigungsbetriebs durch Bereitstellen von Ozon an den zusätzlichen Flüssigkeitstank, um die erste Sprühflüssigkeit von Chemikalien zu reinigen, wobei der Reinigungsbetrieb parallel zu dem zweiten Sprühbetrieb ausgeführt wird.

11. Verfahren nach einem der Ansprüche 1 bis 10, wobei das Verfahren die Schritte aufweist:
Überwachen des Grads einer chemischen Konzentration von Sprühflüssigkeit in dem landwirtschaftlichen Sprüher; und
einem Fortfahren, Ozon bereitzustellen, um mindestens einen Teil des landwirtschaftlichen Sprühers zu reinigen, bis der überwachte Grad der chemischen Konzentration der Sprühflüssigkeit in dem landwirtschaftlichen Sprüher einen vorbestimmten sicheren Grad erreicht.

12. Verfahren nach einem der Ansprüche 1 bis 11, **wobei** der Schritt des Bereitstellens von Ozon für eine vorbestimmte Zeitlänge ausgeführt wird, um sicherzustellen, dass eine sichere Konzentration von Sprühflüssigkeit erreicht ist.

13. Landwirtschaftlicher Sprüher (10) mit:
einem Flüssigkeitstank (18), um Sprühflüssigkeit zu fassen;
einem Sprühapplikatorsystem (50), das an den Flüssigkeitstank (18) gekoppelt ist, um als Teil eines Sprühbetriebs Sprühflüssigkeit von dem landwirtschaftlichen Sprüher anzuwenden; und
einer mit dem Sprühapplikatorsystem (50) gekoppelten Steuerung (36),
**dadurch gekennzeichnet, dass** der landwirtschaftliche Sprüher weiterhin eine Ozonbereitstellung (38) aufweist, die mit der Steuerung (36) gekoppelt ist und eingerichtet ist, um Ozon an den Sprüher bereitzustellen, und wobei die Steuerung eingerichtet ist, um die Schritte des Verfahrens nach einem der Ansprüche 1 bis 12 auszuführen, um mit dem Ozon mindestens einen Teil des landwirtschaftlichen Sprühers nach einem Sprühbetrieb zu reinigen.

14. Landwirtschaftlicher Sprüher nach Anspruch 13, **wobei** die Ozonbereitstellung (38) einen Ozongenerator aufweist, der als Teil des landwirtschaftlichen Sprühers bereitgestellt ist.

15. Landwirtschaftlicher Sprüher nach Anspruch 13 oder Anspruch 14, wobei die Ozonbereitstellung (38) einen Ozontank aufweist, um Ozon zu fassen, wobei der Ozontank als Teil des landwirtschaftlichen Sprühers bereitgestellt ist und mit dem Sprühapplikatorsystem gekoppelt ist.

16. Landwirtschaftlicher Sprüher nach einem der Ansprüche 13 bis 15, **wobei** das Sprühapplikatorsystem (50) aufweist:
ein Düsenarray (24), das entlang einer Länge mindestens eines Sprühauslegers (22) angeordnet ist, und
ein Sprüherleitungssystem, das das Düsenarray (24) mit dem Flüssigkeitstank (18) verbindet, und
wobei die Ozonbereitstellung (38) derart ausgebildet ist, dass Ozon an das Sprühapplikatorsystem an diskreten Positionen entlang der Länge des Sprühauslegers (22) bereitgestellt wird.

17. Landwirtschaftlicher Sprüher nach Anspruch 16, **wobei** die Ozonbereitstellung (38) eine Mehrzahl von Ozoninjektoren aufweist, wobei die Ozoninjektoren angeordnet sind, um Ozon an diskreten Positionen, die entlang der Länge des Sprühauslegers (22) beabstandet sind, in das Sprüherleitungssystem zu injizieren.

18. Landwirtschaftlicher Sprüher nach einem der Ansprüche 13 bis 17, **wobei** der landwirtschaftliche Sprüher (10) eine Spülfluidbereitstellung aufweist, die eingerichtet ist, um nach einem Sprühbetrieb Spülfluid an das Sprühapplikatorsystem bereitzustellen, um die Sprühflüssigkeit zumindest teilweise aus dem Sprühapplikatorsystem zu spülen, wobei die Spülfluidbereitstellung einen Spülwassertank (20), um Spülwasser zu fassen, und/oder eine Luftbereitstellung, vorzugsweise eine Druckluft-Bereitstellungsvorrichtung, aufweist.

19. Landwirtschaftler Sprüher nach einem der Ansprüche 13 bis 18, wobei der landwirtschaftliche Sprüher weiterhin einen zusätzlichen Flüssigkeitstank (40) aufweist, der eingerichtet ist, um nach einem Sprühbetrieb überschüssige Sprühflüssigkeit von dem Sprühapplikatorsystem zu empfangen, wobei Ozon von der Ozonbereitstellung an den zusätzlichen Flüssigkeitstank (40) bereitgestellt wird, um überschüssige Sprühflüssigkeit, die in dem zusätzlichen Tank enthalten ist, zu sterilisieren.

20. Landwirtschaftlicher Sprüher nach einem der Ansprüche 13 bis 19 wobei der Sprüher mindestens einen chemischen Konzentrationssensor aufweist, der eingerichtet ist, um in dem Sprühapplikatorsystem den Grad einer chemischen Konzentration in der überschüssigen Sprühflüssigkeit zu detektieren, wobei der Sprüher derart ausgebildet ist, dass Ozon bereitgestellt wird bis ein sicherer chemischer Konzentrationsgrad von überschüssiger Sprühflüssigkeit erreicht ist.

## Revendications

1. Procédé de commande d'un pulvérisateur agricole, le pulvérisateur agricole (10) comprenant un réservoir de liquide (18) destiné à contenir un liquide à pulvériser et un dispositif d'application par pulvérisation (50) couplé au réservoir de liquide (18), le procédé comprenant l'étape de fourniture d'un liquide à pulvériser à partir du réservoir de liquide (18) vers le dispositif d'application par pulvérisation (50) afin d'exécuter une opération de pulvérisation, **caractérisé en ce que** le procédé comprend, en outre, après achèvement de l'opération de pulvérisation, l'étape de fourniture d'ozone afin de nettoyer au moins une partie du pulvérisateur agricole (10).

2. Procédé selon la revendication 1, comprenant l'étape de production d'ozone, à l'aide d'un générateur d'ozone, afin de le délivrer à au moins une partie du pulvérisateur agricole.

3. Procédé selon la revendication 1 ou 2, comprenant l'étape de fourniture d'ozone à au moins une partie du dispositif d'application par pulvérisation (50), afin de nettoyer au moins une partie du dispositif d'application par pulvérisation.

4. Procédé selon l'une quelconque des revendications 1 à 3, dans lequel le dispositif d'application par pulvérisation (50) comprend une rangée d'injecteurs (24) agencée suivant la longueur d'au moins une perche de pulvérisation (22) et des tuyauteries de pulvérisation reliant la rangée d'injecteurs (24) au réservoir de liquide (18) et dans lequel le procédé comprend, en outre, l'étape de fourniture d'ozone au dispositif d'application par pulvérisation à des emplacements discrets suivant la longueur de la perche de pulvérisation (22).

5. Procédé selon la revendication 4, dans lequel le procédé comprend l'étape d'injection d'ozone dans les tuyauteries de pulvérisation à des emplacements discrets suivant la longueur de la perche de pulvérisation.

6. Procédé selon l'une quelconque des revendications 1 à 5, dans lequel le procédé comprend, en outre, l'étape de rinçage d'au moins une partie du dispositif d'application par pulvérisation (50) en utilisant un fluide de rinçage après achèvement de l'opération de pulvérisation, afin de rincer au moins partiellement le dispositif d'application par pulvérisation de liquide à pulvériser.

7. Procédé selon la revendication 6, dans lequel l'étape de rinçage comprend la fourniture d'au moins l'un d'une eau de rinçage à partir d'un réservoir d'eau de rinçage (20) agencé sur le pulvérisateur agricole, ou d'air comprimé à partir d'un dispositif de fourniture d'air comprimé (36) agencé sur le pulvérisateur agricole.

8. Procédé selon l'une quelconque des revendications 1 à 7, dans lequel le procédé comprend les étapes de :
après achèvement de l'opération de pulvérisation, fourniture d'air comprimé au dispositif d'application par pulvérisation afin d'évacuer au moins une partie du liquide à pulvériser à partir du dispositif d'application par pulvérisation, puis fourniture d'eau de rinçage au dispositif d'application par pulvérisation, et
de fourniture d'ozone à l'eau de rinçage afin de nettoyer le dispositif d'application par pulvérisation.

9. Procédé selon l'une quelconque des revendications 1 à 8, dans lequel le pulvérisateur (10) comprend un réservoir de liquide auxiliaire (40) agencé de manière à recevoir du liquide à pulvériser résiduel à partir du dispositif d'application par pulvérisation après une opération de pulvérisation, et dans lequel le procédé comprend l'étape de fourniture d'ozone au réservoir de liquide auxiliaire (40) à partir de la source d'alimentation en ozone afin de stériliser le liquide à pulvériser résiduel dans le réservoir auxiliaire (40).

10. Procédé selon la revendication 9, dans lequel le pulvérisateur comprend un réservoir de liquide auxiliaire (40), le procédé comprend les étapes supplémentaires de :
exécution d'une première opération de pulvérisation en utilisant un premier liquide à pulvériser délivré à partir d'un réservoir de liquide (18) au dispositif d'application par pulvérisation ;
rinçage du premier liquide à pulvériser vers le réservoir de liquide auxiliaire (40) après la première opération de pulvérisation ;
exécution d'une seconde opération de pulvérisation en utilisant un second liquide à pulvériser délivré à partir d'un réservoir de liquide au dispositif d'application par pulvérisation ; et
exécution d'une opération de nettoyage en délivrant de l'ozone au réservoir de liquide auxiliaire afin de nettoyer le premier agent chimique liquide à pulvériser, ladite opération de nettoyage étant exécutée parallèlement à ladite seconde opération de pulvérisation.

11. Procédé selon l'une quelconque des revendications 1 à 10, dans lequel le procédé comprend les étapes de :
contrôle du niveau de concentration chimique du liquide à pulvériser dans le pulvérisateur agricole ; et
poursuite de la fourniture d'ozone afin de nettoyer au moins une partie du pulvérisateur agricole jusqu'à ce que le niveau de concentration chimique du liquide à pulvériser contrôlé dans le pulvérisateur agricole atteigne un niveau sûr prédéfini.

12. Procédé selon l'une quelconque des revendications 1 à 11, dans lequel l'étape de fourniture d'ozone est exécutée pendant une durée prédéterminée afin d'assurer qu'une concentration sûre de liquide à pulvériser est obtenue.

13. Pulvérisateur agricole (10) comprenant :
un réservoir de liquide (18) destiné à contenir un liquide à pulvériser ;
un dispositif d'application par pulvérisation (50) couplé au réservoir de liquide (18), afin d'appliquer un liquide à pulvériser à partir du pulvérisateur agricole en tant que partie d'une opération de pulvérisation ; et
une unité de commande (36) couplée au dispositif d'application par pulvérisation (50),
**caractérisé en ce que** le pulvérisateur agricole comprend, en outre, une source d'alimentation en ozone (38) couplée à l'unité de commande (36) et agencée de manière à délivrer de l'ozone au pulvérisateur et **en ce que** l'unité de commande est agencée de manière à mettre en œuvre les étapes du procédé selon l'une quelconque des revendications 1 à 12 afin de nettoyer à l'ozone au moins une partie du pulvérisateur agricole après une opération de pulvérisation.

14. Pulvérisateur agricole selon la revendication 13, dans lequel la source d'alimentation en ozone (38) comprend un générateur d'ozone agencé en tant qu'élément du pulvérisateur agricole.

15. Pulvérisateur agricole selon la revendication 13 ou 14, dans lequel la source d'alimentation en ozone (38) comprend un réservoir d'ozone destiné à contenir de l'ozone, le réservoir d'ozone est agencé en tant qu'élément du pulvérisateur agricole et est couplé au dispositif d'application par pulvérisation.

16. Pulvérisateur agricole selon l'une quelconque des revendications 13 à 15, dans lequel le dispositif d'application par pulvérisation (50) comprend :
une rangée d'injecteurs (24) agencée suivant la longueur d'au moins une perche de pulvérisation (22) et des tuyauteries de pulvérisation reliant la rangée d'injecteurs (24) au réservoir de liquide (18) et dans lequel la source d'alimentation en ozone (38) est configurée de telle sorte que de l'ozone est délivré au dispositif d'application par pulvérisation à des emplacements discrets suivant la longueur de la perche de pulvérisation (22).

17. Pulvérisateur agricole selon la revendication 16, dans lequel la source d'alimentation en ozone (38) comprend une pluralité d'injecteurs d'ozone, dans lequel les injecteurs d'ozone sont agencés de manière à injecter de l'ozone dans les tuyauteries de pulvérisateur à des emplacements discrets espacés suivant la longueur de la perche de pulvérisation (22).

18. Pulvérisateur agricole selon l'une quelconque des revendications 13 à 17, dans lequel le pulvérisateur agricole (10) comprend une source d'alimentation en fluide de rinçage disposée de manière à délivrer un fluide de rinçage au dispositif d'application par pulvérisation après une opération de pulvérisation, afin de rincer au moins partiellement le dispositif d'application par pulvérisation du liquide à pulvériser, dans lequel la source d'alimentation en fluide de rinçage comprend au moins l'un d'un réservoir d'eau de rinçage (20) destiné à contenir de l'eau de rinçage, ou d'une source d'alimentation en air, de préférence, un dispositif d'alimentation en air comprimé.

19. Pulvérisateur agricole selon l'une quelconque des revendications 13 à 18, dans lequel le pulvérisateur agricole comprend, en outre, un réservoir de liquide auxiliaire (40) agencé de manière à recevoir un liquide à pulvériser résiduel à partir du dispositif d'application par pulvérisation après une opération de pulvérisation, dans lequel de l'ozone est délivré au réservoir de liquide auxiliaire (40) à partir de la source d'alimentation en ozone afin de stériliser le liquide à pulvériser résiduel contenu dans le réservoir auxiliaire.

20. Pulvérisateur agricole selon l'une quelconque des revendications 13 à 19, dans lequel le pulvérisateur comprend au moins un capteur de concentration chimique agencé de manière à détecter le niveau de la concentration chimique du liquide à pulvériser résiduel dans le dispositif d'application par pulvérisation, dans lequel le pulvérisateur est configuré de telle sorte que l'ozone est délivré jusqu'à ce qu'un niveau de concentration chimique de liquide à pulvériser résiduel sûr soit obtenu.
